# EUROPEAN PATENT SPECIFICATION

(11) **EP 3 778 290 B1**
(45) Date of publication and mention of the grant of the patent: **06.12.2023**
(21) Application number: 19777735.2
(22) Date of filing: 04.02.2019
(51) Int. Cl.: B61L 3/00, B60L 15/20

(54) **TRAIN CONTROL SYSTEM AND TRAIN CONTROL METHOD**
ZUGSTEUERUNGSSYSTEM UND ZUGSTEUERUNGSVERFAHREN
SYSTÈME DE COMMANDE DE TRAIN ET PROCÉDÉ DE COMMANDE DE TRAIN

(30) Priority: 27.03.2018 JP 2018060079
(43) Date of publication of application: 17.02.2021
(73) Proprietor: Hitachi, Ltd., Tokyo 100-8280 (JP)
(72) Inventor: TANAKA, Mitsuhiko, Tokyo 100-8280 (JP); NAKAMURA, Tomohiko, Tokyo 100-8280 (JP); IESHIGE, Naoya, Tokyo 100-8280 (JP)
(74) Representative: Mewburn Ellis LLP
(86) International application number: PCT/JP2019/003929
(87) International publication number: WO 2019/187643

(56) References cited:
- WO-A1-2011/055470
- GB-A- 2 474 934
- JP-A- S 619 102
- JP-A- H07 245 813
- JP-A- 2006 320 037
- JP-A- 2007 053 845
- JP-A- 2008 278 645
- US-A1- 2017 305 396

## Description

### Technical Field

The present invention relates to a train control system and a train control method, and is suitably applicable thereto for executing train stop control based on the number of brake notches, for example.

### Background Art

In order to stop the train at an intended stop point (target stop point), control (fixed position stop control) has been conventionally executed to stop the train at the target stop point utilizing vehicle characteristic data indicating train vehicle characteristics.

Recently, the technique for stopping the train at the target stop point has been disclosed (see patent literature 1) in which the brake notch is selected to allow the train speed to follow the target speed pattern utilizing a pattern (target speed pattern) indicating a relationship between the train speed calculated based on the vehicle characteristic data and the distance to the target stop point. While the train is running at decelerating speeds (deceleration speed running), the above-described control is repeatedly executed in accordance with a predetermined control cycle. This makes it possible to stop the train at the position near the target stop point.

### Citation List

### Patent Literature

Patent Literature 1: Japanese Patent Laid-Open No. 2007-53845
Patent Literature 2: WO 2011/055470 proposes a fixed position stop support system.
Patent Literature 3: GB A 2474934 proposes an automatic train braking system.

### Summary of Invention

### Technical Problem

The technique as disclosed in the patent literature 1 is implemented by executing the fixed position stop control in accordance with the target speed pattern calculated based on the vehicle characteristic data. In the case of large error between the characteristic set as the vehicle characteristic data and the actual vehicle characteristic, prediction accuracy utilizing the vehicle characteristic data is deteriorated, thus degrading the stop control performance. For example, the temporary increase in the boarding rate in excess of the limit of the load compensating device will make a value of the actual deceleration smaller than the deceleration based on the vehicle characteristic data. This may deteriorate the stop control accuracy.

The present invention has been made in consideration of the above-described problem. It is an object of the present invention to propose the train control system and the train control method, capable of accurately stopping the train at the target stop position.

### Solution to Problem

In order to solve the above-described problems, in a first aspect, the present invention provides a train control system for executing control of stopping a train according to claim 1.

In a second aspect, the present invention provides a train control method for executing control of stopping a train according to claim 5.

The above-described structure corrects the brake notch pattern to be consistent with the actual deceleration of the train. This makes it possible to stop the train at the target stop position accurately.

### Advantageous Effects of Invention

The present invention is capable of executing the fixed position stop control in accordance with the vehicle characteristics.

### Brief Description of Drawings

Fig. 1 is a view showing an example of a structure constituting a train control system according to a first embodiment.
Fig. 2 is a view showing an example of a flowchart of a fixed position stop control processing according to the first embodiment.
Fig. 3 is a view showing a relationship between the train speed and the distance to a target stop point under the fixed position stop control according to the first embodiment.
Fig. 4 is a view showing an example of a brake notch pattern correction according to the first embodiment.

### Description of Embodiments

An embodiment of the present invention will be described referring to the drawings.

### (1) First Embodiment

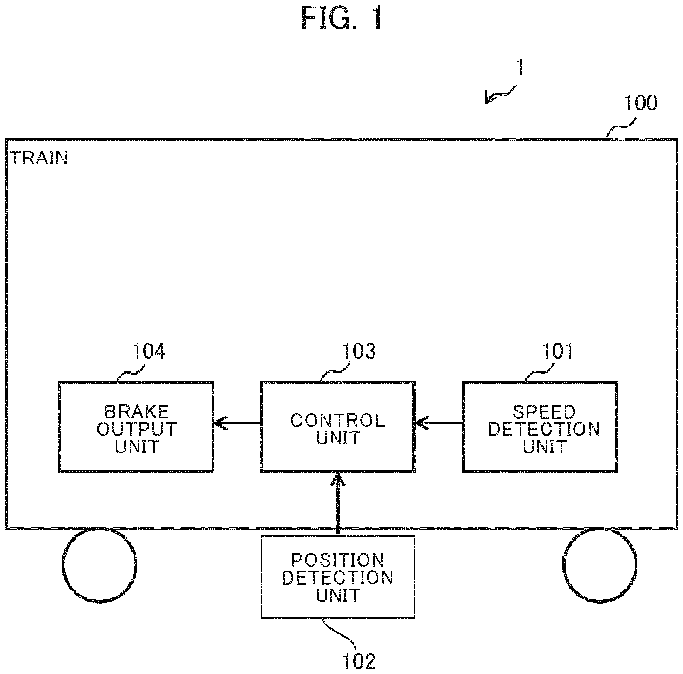

Fig. 1 shows an overall structure of a train control system 1 according to a first embodiment. The train control system 1 allows execution of control (fixed position stop control) for stopping a train 100 at a target stop point as a target point at which the train 100 is stopped.

The train 100 includes a speed detection unit 101 capable of detecting a current speed of the train 100, a position detection unit 102 capable of detecting a current position of the train 100, a control unit 103 for calculating the number of brake notches for braking the train 100 from the information on the speed of the train 100, which has been detected by the speed detection unit 101, and the position of the train 100, which has been detected by the position detection unit 102, and a brake output unit 104 for operating the brake of the train 100 (executing control for stopping the train 100) based on the number of brake notches outputted from the control unit 103.

The control unit 103 is constituted by a calculator (computer) with a CPU for executing processing, a memory for storing the information, and the like. Functions of the control unit 103 (calculation unit, determination unit, correction unit, and the like) may be implemented by executing the program read into the memory by the CPU (software), by hardware such as an exclusive circuit, and by combination of the software and the hardware. The function of the control unit 103 may be partially implemented by other computer communicable with the control unit 103.

The control unit 103 calculates a target speed pattern (an example of target speed information) that prescribes the relationship between the distance to the target stop point and the speed of the train 100 utilizing the deceleration corresponding to the predetermined number of brake notches.

The control unit 103 stores the brake notch pattern (an example of the brake notch information) that prescribes the relationship of a difference (speed difference) between the speed specified from the target speed pattern and the speed of the train 100 with the number of outputted brake notches (stored in the memory).

It is possible to provide the single brake notch pattern (predetermined brake notch pattern) prescribed based on the predetermined number of brake notches, or the respective brake notch patterns (the respective brake notch patterns for correction) prescribed based on the corresponding numbers of brake notches in addition to the predetermined brake notch pattern.

The control unit 103 measures actual vehicle characteristics of the train 100 which is running at decelerating speeds (operation section, distance between stations, gradient (gradient in the section of the relevant railroad route), train speed, rolling stock type, train type, boarding rate), and controls the deceleration based on the measured vehicle characteristics so that the train 100 is stopped at the target stop position accurately.

For example, the control unit 103 compares the speed change rate (deceleration of the brake notch as a design value) at the speed of the target speed pattern per unit time, and the speed change rate (deceleration of the train 100) at the speed of the train 100 per unit time. If it is determined that the comparison result is within a predetermined tolerance range, the brake notch pattern used for determining the number of brake notches is corrected to be consistent with the actual deceleration of the train 100. For example, if the deceleration of the train 100 is lower than the deceleration of the target speed pattern, the control unit 103 corrects the brake notch pattern so that the braking force to the train 100 is increased. For example, if the deceleration of the train 100 is higher than the deceleration of the target speed pattern, the control unit 103 corrects the brake notch pattern so that the braking force to the train 100 is reduced. The above-described correction allows the train 100 to be accurately stopped at the target stop position.

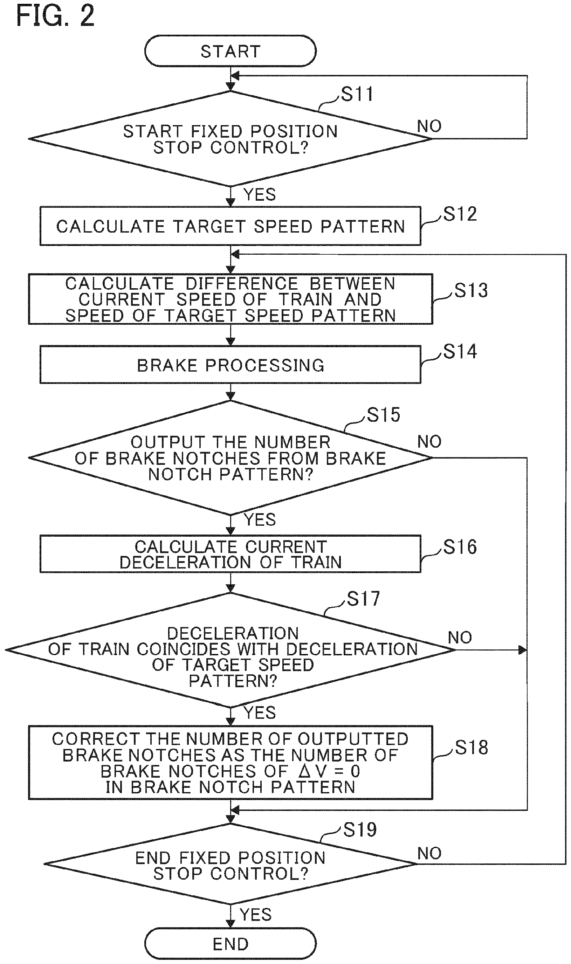

Fig. 2 is an example of a flowchart relating to the fixed position stop control processing to be executed by the control unit 103.

The control unit 103 determines whether or not the fixed position stop control is to be started (step S11). More specifically, the control unit 103 determines whether or not the train has passed over a ground unit indicating a position (control start position) at which the fixed position stop control is started. If it is determined that the fixed position stop control is to be started, the control unit 103 proceeds the processing to step S12. If it is determined that the fixed position stop control is not to be started, the control unit 103 executes the processing in step S11 again.

In step S12, the control unit 103 calculates the target speed pattern at the deceleration corresponding to the predetermined number of brake notches based on the control start position and the target stop point.

In step S13, the control unit 103 calculates the difference (speed difference) between the current speed of the train 100, which has been detected by the speed detection unit 101 and the speed of the target speed pattern corresponding to the current position of the train 100, which has been detected by the position detection unit 102. For example, it is possible to calculate the speed difference by subtracting the speed of the target speed pattern from the current speed of the train 100.

In step S14, the control unit 103 executes the brake processing. More specifically, the control unit 103 determines the number of brake notches to be outputted based on the brake notch pattern, the speed specified from the target speed pattern, the current speed of the train 100, and the calculated speed difference. When the number of brake notches is determined, the control unit 103 outputs the determined number of brake notches to the brake output unit 104. Based on the number of brake notches outputted from the control unit 103, the brake output unit 104 controls braking to the train 100.

In step S15, the control unit 103 determines whether or not the number of brake notches has been outputted from the brake notch pattern (whether or not the number of brake notches has been outputted to the brake output unit 104). If it is determined that the number of brake notches has been outputted to the brake output unit 104, the control unit 103 proceeds the processing to step S16. If it is determined that the number of brake notches has not been outputted to the brake output unit 104, the control unit 103 proceeds the processing to step S19.

In step S16, based on the current speed of the train 100, which has been detected by the speed detection unit 101, the control unit 103 calculates the current deceleration of the train 100.

In step S17, the control unit 103 determines whether or not the current deceleration of the train 100 and the deceleration of the target speed pattern are within a predetermined tolerance range (coincided or not). If it is determined that they are coincided, the control unit 103 proceeds the processing to step S18. If it is determined that they are not coincided, the control unit 103 proceeds the processing to step S19.

In step S18, based on the outputted number of brake notches, the control unit 103 changes the brake notch pattern. For example, the control unit 103 corrects the outputted number of brake notches as the number of brake notches corresponding to ΔV=0 of the brake notch pattern (the base brake notch pattern is parallely shifted). For example, the control unit 103 is configured to use the brake notch pattern for correction, which is provided corresponding to the outputted number of brake notches.

The processing to be executed in steps S17 and S18 is not limited to the one as described above. For example, in addition to, or instead of steps S17 and S18, the control unit 103 determines whether or not the deceleration of the train 100 has a limiting value (maximum value or minimum value). If it is determined that the limiting value exists, in step S18, the number of brake notches at the deceleration of the train 100, which is the closest to the deceleration of the brake notch pattern is specified. It is then possible to change the brake notch pattern based on the specified number of brake notches. Execution of the processing appropriately allows the train 100 to stop at the target stop point based on the optimal deceleration among those variable in spite of the determination that there is no coincided deceleration, for example.

In step S19, the control unit 103 determines whether or not the fixed position stop control is to be finished. More specifically, the control unit 103 determines whether or not the train 100 has been stopped. If it is determined that the fixed position stop control is to be finished, the control unit 103 finishes execution of the fixed position stop control. If it is determined that the fixed position stop control is not to be finished, the control unit 103 proceeds the processing to step S13.

### (Example of fixed position stop control)

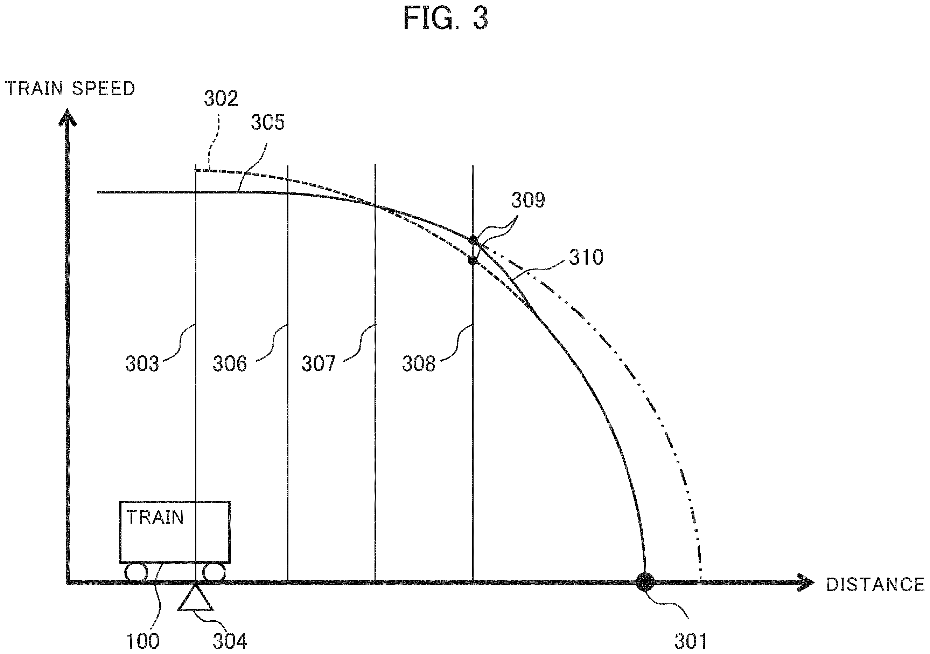

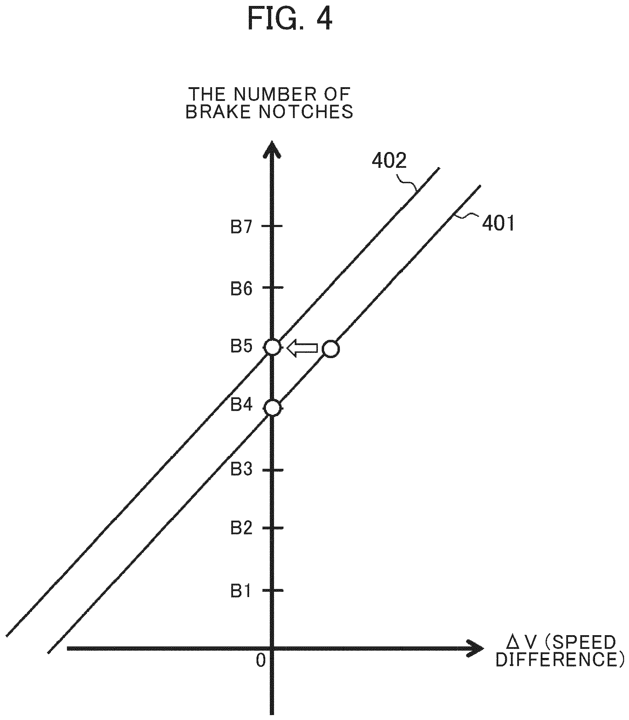

A specific explanation of the fixed position stop control will be made referring to Figs. 2 to 4. Fig. 3 is a view showing a relationship (an example) between the speed of the train 100 and the distance to a target stop point 301 under the fixed position stop control. Fig. 4 is a view showing an example of correction of a brake notch pattern 401.

An explanation will be made by taking the case under the following conditions (A) to (C) as an example.

### Condition (A)

It is assumed that the number of brake notches of the train 100 is in the range from "1" to "7".

### Condition (B)

It is assumed that a target speed pattern 302 is calculated utilizing the deceleration corresponding to the number "4" of brake notches as the deceleration corresponding to the predetermined number of brake notches.

### Condition (C)

The deceleration of the train 100 varies with a condition of an overhead wire voltage, and a condition of a load compensating device due to the boarding rate. For example, it is assumed that the deceleration of the train 100 corresponding to the predetermined number of brake notches is lower than the rated deceleration (deceleration corresponding to the predetermined number of brake notches when designing (designed value of deceleration)) because of a large number of passengers on the train 100.

### (Control start point 303)

When the train 100 passes over a ground unit 304 at a control start point 303 indicating the position from where the fixed position stop control is started, the position detection unit 102 of the train 100 transmits the position information to the control unit 103. Based on the received position information, the control unit 103 determines to start execution of the fixed position stop control (step S11), and arithmetically obtains the target speed pattern 302 for stopping the train at the target stop point 301 based on the position information (step S12).

The control unit 103 compares the speed of the train 100 (train speed 305) at the control start point 303 with the speed of the target speed pattern 302 to calculate the speed difference (step S13). The control unit 103 then executes the brake processing (step S14).

At this time, at the control start point 303, as the relationship of the speed of the target speed pattern 302 > the speed of the train 100 is established, and the calculated speed difference is smaller than the speed difference corresponding to the number "1" of brake notches, the control unit 103 determines not to set (select) nor output the number of brake notches (step S15). The processing then proceeds to step S19. The control unit 103 determines whether the train 100 has been stopped (step S19). Actually, the train 100 is not stopped, and accordingly, the processing proceeds to step S13.

### (First point 306)

It is assumed that the control unit 103 executes the similar processing, and the train 100 has reached a first point 306. At the first point 306, as the relationship of the speed of the target speed pattern 302 > the speed of the train 100 is established, and the calculated speed difference is within a speed difference range corresponding to the number of brake notches from "1" to "3", the control unit 103 sets the number of brake notches (any one of the numbers of brake notches from "1" to "3") corresponding to the calculated speed difference from the brake notch pattern 401 (step S14). Then it is determined to output the set number of brake notches (step S15).

The control unit 103 calculates the current deceleration of the train 100 (step S16), and compares the deceleration of the target speed pattern 302 with the deceleration of the train 100 (step S17). At this time, it is assumed that the target speed pattern 302 is calculated utilizing the deceleration corresponding to the number "4" of brake notches (condition (B)). Any one of the numbers of brake notches from "1" to "3" is outputted, and the deceleration of the train 100 is lower than the deceleration as the designed value (condition (C)). As both decelerations do not coincide with each other, the processing proceeds to step S19. The control unit 103 determines whether the train 100 has been stopped (step S19). As the train 100 is not stopped, the processing proceeds to step S13.

### (Second point 307)

It is assumed that the control unit 103 executes the similar processing, and the train 100 has reached a second point 307. At the second point 307, as the speed of the target speed pattern 302 is equal to the speed of train 100, the speed difference becomes "0". The number of brake notches is set to "4" from the brake notch pattern 401 (step S14). It is determined to output the set number "4" of brake notches (step S15). The control unit 103 then calculates the current deceleration of the train 100 (step S16).

It is normally assumed that the target speed pattern 302 is calculated utilizing the deceleration corresponding to the number "4" of brake notches. Therefore, when outputting the number "4" of brake notches, the train is decelerated along the target speed pattern 302. In this case, however, the deceleration corresponding to the number "4" of brake notches of the train 100 is supposed to be lower than the deceleration corresponding to the number "4" of brake notches as the designed value (condition (c)). Therefore, the speed of the train 100 may exceed the speed of the target speed pattern 302 without securing sufficient deceleration force.

As the estimated deceleration of the train 100 cannot be secured, the control unit 103 determines that the calculated deceleration and the deceleration of the target speed pattern 302 do not coincide with each other (step S17). The processing then proceeds to step S19. The control unit 103 determines whether the train 100 has been stopped (step S19). As the train 100 is not stopped, the processing proceeds to step S13.

### (Third point 308)

It is assumed that the control unit 103 executes the similar processing, and the train 100 has reached a third point 308. At the third point 308, as the relationship of the speed of the target speed pattern 302 < the speed of the train 100 is established, and the calculated speed difference is within the speed difference range corresponding to the number of brake notches from "5" to "7", the control unit 103 sets the number of brake notches (any one of numbers of brake notches from "5" to "7") corresponding to the calculated speed difference from the brake notch pattern 401. It is then determined to output the set number of brake notches (step S15). It is assumed that at the third point 308, the control unit 103 outputs "5" as the number of brake notches.

The control unit 103 calculates the current deceleration of the train 100 (step S16). It is assumed that a value 309 (within the predetermined tolerance range) which is the same as the deceleration corresponding to the number "4" of brake notches as the designed value is derived from output of the number "5" of brake notches. In this case, the control unit 103 determines that the calculated deceleration coincides with the deceleration of the target speed pattern 302 (step S17). The processing then proceeds to step S18.

According to the brake notch pattern 401, the number of brake notches is "4" in the case of ΔV = 0. Meanwhile, the number of brake notches corresponding to the deceleration of the target speed pattern 302 is "5". Accordingly, the control unit 103 corrects the brake notch pattern 401 to a brake notch pattern 402 to be consistent with the number "5" of brake notches (step S18). In other words, the brake notch pattern 401 is a predetermined function, taking the predetermined number of brake notches ("4" in this example) as an intercept when there is no speed difference. If it is determined that the deceleration of the train 100 and the deceleration of the target speed pattern 302 are within the predetermined tolerance range, the control unit 103 parallely shifts the predetermined function in a parallel direction, taking the most recently set number of brake notches ("5" in this example) as the intercept so that the braking force to the train 100 is increased. Subsequent to correction, in step S14, the control unit 103 sets the number of brake notches using the brake notch pattern 402. The above-described correction allows a corrected speed 310 of the train 100 to pursue (follow) the target speed pattern 302.

Then the control unit 103 determines whether the train 100 has been stopped (step S19). As the train 100 is not stopped, the processing proceeds to step S13.

In this example, the explanation has been made on the case in which the deceleration outputted from the train 100 is lower than the one as the designed value. It is also possible to execute the fixed position stop control as well in the case in which the deceleration outputted from the train 100 is higher than the one as the designed value.

In the actual train operation, the actual deceleration corresponding to the outputted number of brake notches is measured, and the brake notch pattern is corrected based on the actual deceleration. This makes it possible to improve accuracy in the fixed position stop control. Furthermore, the speed of the train 100 may be controlled along the target speed pattern. This makes it possible to avoid circumstances that may deteriorate riding comfort of the train 100.

Subsequent to the brake notch pattern correction, the control unit 103 repeatedly executes the processing for correcting the brake notch pattern based on the speed of the train 100 detected by the speed detection unit 101 until the train 100 is stopped. This makes it possible to cope with change in conditions, for example, rain, strong wind, variation in the railway track (being consistent with change in the vehicle characteristics realtime). It is therefore possible to avoid deterioration in accuracy of the fixed position stop control owing to change in the vehicle characteristics.

The embodiment allows execution of the fixed position stop control in accordance with vehicle characteristics.

### (2) Other Embodiment

In the embodiment as described above, the explanation has been made on the case in which the present invention is applied to the train control system 1. The present invention is not limited to the one as described above, but may be widely applied to various train control systems and train control methods.

In the above-described embodiment, the explanation has been made on a linear function as the brake notch pattern. The present invention is not limited to the one as described above, but may be any other function, for example, a quadratic function, a step function, and an exponential function as the brake notch pattern.

In the above-described embodiment, the explanation has been made on the case in which upon output of the number of brake notches from the brake notch pattern, the brake notch pattern is corrected by comparison between the deceleration of the train 100 and the deceleration of the target speed pattern. The present invention is not limited to the one as described above. In addition to or instead of the above-described case, it is possible to correct the brake notch pattern by comparison between the deceleration of the train 100 and the deceleration of the target speed pattern on a regular basis.

The information of the program, the table, the file and the like for implementing the respective functions as described above may be stored in the storage device, for example, a memory, a hard disk, an SSD (Solid State Drive) and the like, or the recording medium, for example, an IC card, an SD card, a DVD and the like.

The method of detecting the speed of the train 100 by the speed detection unit 101 may be implemented in a non-restrictive manner. For example, a compact speed generator may be attached to the axle to measure the generated voltage, frequency and the like. Furthermore, the method that counts the gear of the drive unit by magnetic induction, and any other method are implementable.

The method of detecting the position of the train 100 by the position detection unit 102 may be implemented in the non-restrictive manner. For example, it is possible to implement the method for detecting the failure in the flow of the signal current to the relay resulting from the short-circuit of both rails caused by the axle of the train 100 that enters into the section where the signal current has been applied to the rail. It is also possible to implement the method of detecting the specific electric wave generated by the device attached to the train 100 at a ground side or via GPS (Global Positioning System) in the manner.

The above-described structure may be appropriately modified so long as the structure does not deviate from the scope of the present invention.

### List of Reference Signs

1: train control system,
100: train,
101: speed detection unit,
102: position detection unit,
103: control unit,
104: brake output unit

## Claims

1. A train control system (1) for executing control of stopping a train (100) based on a brake notch position for braking the train, comprising:
a speed detection unit (101) for detecting a current speed of the train;
a position detection unit (102) for detecting a current position of the train;
a calculation unit for calculating a target speed pattern prescribing a relationship between a distance to a target stop point indicating a target point at which the train is to be stopped and a speed of the train, and for calculating a speed difference indicating a difference between a speed specified from the target speed pattern based on the current position of the train and the current speed of the train;
a determination unit for determining the brake notch position to be outputted based on a brake notch pattern prescribing a relationship of a speed difference between the speed specified from the target speed pattern and the current speed of the train with the brake notch position as a predetermined function in which a predetermined brake notch position is an intercept if there is no speed difference calculated by the calculation unit; and
a correction unit for determining whether or not a deceleration derived from the target speed pattern and a deceleration of the train are within a predetermined tolerance range,
wherein if the correction unit determines that said decelerations are within the predetermined tolerance range, the correction unit parallely shifts the predetermined function to correct the brake notch pattern, taking the brake notch position most recently determined by the determination unit as the intercept,
wherein if the correction unit determines that said decelerations are not within the predetermined tolerance range, the correction unit determines whether or not the deceleration of the train has a limiting value, such that if it is determined that the limiting value exists , the correction unit specifies the brake notch position indicating the deceleration which is the closest to the deceleration derived from the target speed pattern , and parallely shifts the predetermined function to correct the brake notch pattern, taking the specified brake notch position as the intercept, and
wherein the determination unit subsequently sets the brake notch position to be outputted based on the function parallely shifted by the correction unit.

2. The train control system (1) according to claim 1, wherein if the deceleration of the train is lower than the deceleration derived from the
target speed pattern, the correction unit corrects the brake notch pattern to increase a braking force to the train.

3. The train control system (1) according to claim 1, wherein if the deceleration of the train is higher than the deceleration derived from the
target speed pattern, the correction unit corrects the brake notch pattern to reduce a braking force to the train.

4. The train control system (1) according to claim 1, wherein the correction unit corrects the brake notch pattern based on the speed of the train to be detected by the speed detection unit until the train is stopped.

5. A train control method for executing control of stopping a train (100) based on a brake notch position for braking the train, the method comprising:
a first step in which a speed detection unit (101) detects a current speed of the train;
a second step in which a position detection unit (102) detects a current position of the train;
a third step in which a calculation unit calculates a target speed pattern prescribing a relationship between a distance to a target stop point indicating a target point at which the train is stopped and a speed of the train, and calculates a speed difference indicating a difference between a speed specified from the target speed pattern based on the current position of the train and the current speed of the train;
a fourth step in which a determination unit determines the brake notch position to be outputted based on a brake notch pattern prescribing a relationship of a speed difference between the speed specified from the target speed pattern and the current speed of the train with the brake notch position as a predetermined function in which a predetermined brake notch position is an intercept if there is no speed difference calculated by the calculation unit,; and
a fifth step in which a correction unit determines whether or not a deceleration derived from the target speed pattern and a deceleration of the train are within a predetermined tolerance range,
wherein if the correction unit determines that said decelerations are within the predetermined tolerance range, the correction unit parallely shifts the predetermined function to correct the brake notch pattern, taking the brake notch position most recently determined by the determination unit as the intercept,
wherein if the correction unit determines that said decelerations are not within the predetermined tolerance range, the correction unit determines whether or not the deceleration of the train has a limiting value, such that if it is determined that the limiting value exists , the correction unit specifies the brake notch position indicating the deceleration which is the closest to the deceleration derived from the target speed pattern, and parallely shifts the predetermined function to correct the brake notch pattern, taking the specified brake notch position as the intercept, and
wherein the determination unit subsequently sets the brake notch position to be outputted based on the function parallely shifted by the correction unit.

## Patentansprüche

1. Zugsteuersystem (1) zum Ausführen des Steuerns des Anhaltens eines Zugs (100) basierend auf einer Bremshaltepunktposition zum Bremsen des Zugs, wobei das Zugsteuersystem Folgendes umfasst:
eine Geschwindigkeitsdetektionseinheit (101) zum Detektieren einer aktuellen Geschwindigkeit des Zugs;
eine Positionsdetektionseinheit (102) zum Detektieren einer aktuellen Position des Zugs;
eine Berechnungseinheit zum Berechnen eines Sollgeschwindigkeitsmusters, das eine Beziehung zwischen einem Abstand zu einem Zielanhaltpunkt, der einen Zielpunkt angibt, an dem der Zug anzuhalten ist, und einer Geschwindigkeit des Zugs vorgibt, und zum Berechnen einer Geschwindigkeitsdifferenz, die die Differenz zwischen einer Geschwindigkeit, die anhand des Sollgeschwindigkeitsmusters basierend auf der aktuellen Position des Zugs spezifiziert ist, und der aktuellen Geschwindigkeit des Zugs angibt;
eine Bestimmungseinheit zum Bestimmen der Bremshaltepunktposition, die basierend auf einem Bremshaltepunktmuster auszugeben ist, das eine Beziehung einer Geschwindigkeitsdifferenz zwischen der anhand des Sollgeschwindigkeitsmusters spezifizierten Geschwindigkeit und der aktuellen Geschwindigkeit des Zugs mit der Bremshaltepunktposition als eine vorbestimmte Funktion vorgibt, in der eine vorbestimmte Bremshaltepunktposition ein Schnittpunkt ist, wenn keine von der Berechnungseinheit berechnete Geschwindigkeitsdifferenz vorliegt; und
eine Korrektureinheit zum Bestimmen, ob eine aus dem Sollgeschwindigkeitsmuster abgeleitete Verzögerung und eine Verzögerung des Zugs innerhalb eines vorbestimmten Toleranzbereichs liegen,
wobei, wenn die Korrektureinheit bestimmt, dass die Verzögerungen innerhalb des vorbestimmten Toleranzbereichs liegen, die Korrektureinheit die vorbestimmte Funktion parallelverschiebt, um das Bremshaltepunktmuster zu korrigieren, indem sie die von der Bestimmungseinheit als letztes als Schnittpunkt bestimmte Bremshaltepunktposition heranzieht,
wobei, wenn die Korrektureinheit bestimmt, dass die Verzögerungen nicht innerhalb des vorbestimmten Toleranzbereichs liegen, die Korrektureinheit bestimmt, ob die Verzögerung des Zugs einen begrenzenden Wert aufweist, sodass, wenn bestimmt wird, dass ein begrenzender Wert vorliegt, die Korrektureinheit die Bremshaltepunktposition, die die Verzögerung, die der aus dem Sollgeschwindigkeitsmuster abgeleiteten Verzögerung am nächsten ist, anzeigt, spezifiziert und die vorbestimmte Funktion parallelverschiebt, um das Bremshaltepunktmuster zu korrigieren, indem sie die spezifizierte Bremshaltepunktposition als Schnittpunkt heranzieht, und
wobei die Bestimmungseinheit anschließend die Bremshaltepunktposition, die basierend auf der von der Korrektureinheit parallelverschobenen Funktion auszugeben ist, einstellt.

2. Zugsteuersystem (1) nach Anspruch 1, wobei, wenn die Verzögerung des Zugs unter der aus dem Sollgeschwindigkeitsmuster abgeleiteten Verzögerung liegt, die Korrektureinheit das Bremshaltepunktmuster korrigiert, um die Bremskraft des Zugs zu erhöhen.

3. Zugsteuersystem (1) nach Anspruch 1, wobei, wenn die Verzögerung des Zugs über der aus dem Sollgeschwindigkeitsmuster abgeleiteten Verzögerung liegt, die Korrektureinheit das Bremshaltepunktmuster korrigiert, um die Bremskraft des Zugs zu verringern.

4. Zugsteuersystem (1) nach Anspruch 1, wobei die Korrektureinheit das Bremshaltepunktmuster basierend auf der Geschwindigkeit des Zugs korrigiert, die von der Geschwindigkeitsdetektionseinheit zu detektieren ist, bis der Zug angehalten wird.

5. Zugsteuerverfahren zum Ausführen des Steuerns des Anhaltens eines Zugs (100) basierend auf einer Bremshaltepunktposition zum Bremsen des Zugs, wobei das Verfahren Folgendes umfasst:
einen ersten Schritt, in dem eine Geschwindigkeitsdetektionseinheit (101) eine aktuelle Geschwindigkeit des Zugs detektiert;
einen zweiten Schritt, in dem eine Positionsdetektionseinheit (102) eine aktuelle Position des Zugs detektiert;
einen dritten Schritt, in dem eine Berechnungseinheit ein Sollgeschwindigkeitsmuster berechnet, das eine Beziehung zwischen einem Abstand zu einem Zielanhaltpunkt, der einen Zielpunkt angibt, an dem der Zug anzuhalten ist, und einer Geschwindigkeit des Zugs vorgibt, und eine Geschwindigkeitsdifferenz berechnet, die die Differenz zwischen einer Geschwindigkeit, die anhand des Sollgeschwindigkeitsmusters basierend auf der aktuellen Position des Zugs spezifiziert ist, und der aktuellen Geschwindigkeit des Zugs angibt;
einen vierten Schritt, in dem eine Bestimmungseinheit die Bremshaltepunktposition bestimmt, die basierend auf einem Bremshaltepunktmuster auszugeben ist, das eine Beziehung einer Geschwindigkeitsdifferenz zwischen der anhand des Sollgeschwindigkeitsmusters spezifizierten Geschwindigkeit und der aktuellen Geschwindigkeit des Zugs mit der Bremshaltepunktposition als vorbestimmter Funktion vorgibt, in der eine vorbestimmte Bremshaltepunktposition ein Schnittpunkt ist, wenn kein von der Berechnungseinheit berechneter Geschwindigkeitsunterschied vorliegt; und
einen fünften Schritt, in dem eine Korrektureinheit bestimmt, ob eine aus dem Sollgeschwindigkeitsmuster abgeleitete Verzögerung und eine Verzögerung des Zugs innerhalb eines vorbestimmten Toleranzbereichs liegen,
wobei, wenn die Korrektureinheit bestimmt, dass die Verzögerungen innerhalb des vorbestimmten Toleranzbereichs liegen, die Korrektureinheit die vorbestimmte Funktion parallelverschiebt, um das Bremshaltepunktmuster zu korrigieren, indem sie die von der Bestimmungseinheit als letztes als Schnittpunkt bestimmte Bremshaltepunktposition heranzieht,
wobei, wenn die Korrektureinheit bestimmt, dass die Verzögerungen nicht innerhalb des vorbestimmten Toleranzbereichs liegen, die Korrektureinheit bestimmt, ob die Verzögerung des Zugs einen begrenzenden Wert aufweist, sodass, wenn bestimmt wird, dass ein begrenzender Wert vorliegt, die Korrektureinheit die Bremshaltepunktposition, die die Verzögerung, die der aus dem Sollgeschwindigkeitsmuster abgeleiteten Verzögerung am nächsten ist, anzeigt, spezifiziert und die vorbestimmte Funktion parallelverschiebt, um das Bremshaltepunktmuster zu korrigieren, indem sie die spezifizierte Bremshaltepunktposition als Schnittpunkt heranzieht, und
wobei die Bestimmungseinheit anschließend die Bremshaltepunktposition, die basierend auf der parallel dazu von der Korrektureinheit verschobenen Funktion auszugeben ist, einstellt.

## Revendications

1. Système de commande de train (1) pour exécuter une commande d'arrêt d'un train (100) sur la base d'une position d'encoche de frein pour freiner le train, comprenant :
une unité de détection de vitesse (101) pour détecter une vitesse actuelle du train ;
une unité de détection de position (102) pour détecter une position actuelle du train ;
une unité de calcul pour calculer un motif de vitesse cible prescrivant une relation entre une distance jusqu'à un point d'arrêt cible indiquant un point cible au niveau duquel le train doit s'arrêter et une vitesse du train, et pour calculer une différence de vitesse indiquant une différence entre une vitesse spécifiée à partir du motif de vitesse cible sur la base de la position actuelle du train et la vitesse actuelle du train ;
une unité de détermination pour déterminer la position d'encoche de frein à délivrer en sortie sur la base d'un motif d'encoche de frein prescrivant une relation d'une différence de vitesse entre la vitesse spécifiée à partir du motif de vitesse cible et la vitesse actuelle du train avec la position d'encoche de frein en tant que fonction prédéterminée dans laquelle une position d'encoche de frein prédéterminée est une intersection s'il n'y a pas de différence de vitesse calculée par l'unité de calcul ; et
une unité de correction pour déterminer si oui ou non une décélération dérivée du motif de vitesse cible et une décélération du train sont dans une plage de tolérance prédéterminée,
dans lequel si l'unité de correction détermine que lesdites décélérations sont dans la plage de tolérance prédéterminée, l'unité de correction décale parallèlement la fonction prédéterminée pour corriger le motif d'encoche de frein, en prenant la position d'encoche de frein la plus récemment déterminée par l'unité de détermination en tant qu'intersection,
dans lequel si l'unité de correction détermine que lesdites décélérations ne sont pas dans la plage de tolérance prédéterminée, l'unité de correction détermine si oui ou non la décélération du train présente une valeur de limitation, de sorte que s'il est déterminé que la valeur de limitation existe, l'unité de correction spécifie la position d'encoche de frein indiquant la décélération qui est la plus proche de la décélération dérivée du motif de vitesse cible, et décale parallèlement la fonction prédéterminée pour corriger le motif d'encoche de frein, en prenant la position d'encoche de frein spécifiée en tant qu'intersection, et
dans lequel l'unité de détermination règle ensuite la position d'encoche de frein à délivrer en sortie sur la base de la fonction décalée parallèlement par l'unité de correction.

2. Système de commande de train (1) selon la revendication 1, dans lequel si la décélération du train est inférieure à la décélération dérivée du motif de vitesse cible, l'unité de correction corrige le motif d'encoche de frein pour augmenter une force de freinage sur le train.

3. Système de commande de train (1) selon la revendication 1, dans lequel si la décélération du train est supérieure à la décélération dérivée du motif de vitesse cible, l'unité de correction corrige le motif d'encoche de frein pour réduire une force de freinage sur le train.

4. Système de commande de train (1) selon la revendication 1, dans lequel l'unité de correction corrige le motif d'encoche de frein sur la base de la vitesse du train devant être détectée par l'unité de détection de vitesse jusqu'à ce que le train soit arrêté.

5. Procédé de commande de train pour exécuter une commande d'arrêt d'un train (100) sur la base d'une position d'encoche de frein pour freiner le train, le procédé comprenant :
une première étape dans laquelle une unité de détection de vitesse (101) détecte une vitesse actuelle du train ;
une deuxième étape dans laquelle une unité de détection de position (102) détecte une position actuelle du train ;
une troisième étape dans laquelle une unité de calcul calcule un motif de vitesse cible prescrivant une relation entre une distance jusqu'à un point d'arrêt cible arrêté indiquant un point cible au niveau duquel le train est arrêté et une vitesse du train, et calcule une différence de vitesse indiquant une différence entre une vitesse spécifiée à partir du motif de vitesse cible sur la base de la position actuelle du train et de la vitesse actuelle du train ;
une quatrième étape dans laquelle une unité de détermination détermine la position d'encoche de frein à délivrer en sortie sur la base d'un motif d'encoche de frein prescrivant une relation d'une différence de vitesse entre la vitesse spécifiée à partir du motif de vitesse cible et la vitesse actuelle du train avec la position d'encoche de frein en tant que fonction prédéterminée dans laquelle une position d'encoche de frein prédéterminée est une intersection s'il n'y a pas de différence de vitesse calculée par l'unité de calcul, et
une cinquième étape dans laquelle une unité de correction détermine si oui ou non une décélération dérivée du motif de vitesse cible et une décélération du train sont dans une plage de tolérance prédéterminée,
dans lequel si l'unité de correction détermine que lesdites décélérations sont dans la plage de tolérance prédéterminée, l'unité de correction décale parallèlement la fonction prédéterminée pour corriger le motif d'encoche de frein, en prenant la position d'encoche de frein la plus récemment déterminée par l'unité de détermination en tant qu'intersection,
dans lequel si l'unité de correction détermine que lesdites décélérations ne sont pas dans la plage de tolérance prédéterminée, l'unité de correction détermine si oui ou non la décélération du train présente une valeur de limitation, de sorte que s'il est déterminé que la valeur de limitation existe, l'unité de correction spécifie la position d'encoche de frein indiquant la décélération qui est la plus proche de la décélération dérivée du motif de vitesse cible, et décale parallèlement la fonction prédéterminée pour corriger le motif d'encoche de frein, en prenant la position d'encoche de frein spécifiée en tant qu'intersection, et
dans lequel l'unité de détermination règle ensuite la position d'encoche de frein à délivrer en sortie sur la base de la fonction décalée parallèlement par l'unité de correction.
